# EUROPEAN PATENT APPLICATION

(11) **EP 2 690 838 A1**
(43) Date of publication of application: **29.01.2014**
(21) Application number: 12305892.7
(22) Date of filing: 23.07.2012
(51) Int. Cl.: H04L 29/06, G06F 21/34

(54) **Authentification system preserving secret data confidentiality**

(71) Applicant: Alcatel Lucent, 75007 Paris (FR)
(72) Inventor: Papillon, Serge, 91620 Nozay (FR); El-Abed, Haithem, 91620 Nozay (FR)
(74) Representative: Mouney, Jérôme

(57) **Abstract**

For authenticating a user of a communication device (CD) implementing a client application (CA) connected to an application server (AS) through a telecommunication network (TN), the application server (AS) having sent a challenge (Ch) to the client application to authenticate the user, an user device (UD) associated with the communication device (CD) establishes a connection with the client application (CA) that invites the user to enter secret data (SD) on a screen of the communication device (CD), retrieves the challenge (Ch) from the client application (CA), prompts the user to enter secret data (SD), calculates a response (Rp) to the challenge (Ch), based on secret data (SD) entered by the user and the retrieved challenge (Ch), and sends the response (Rp) to the client application (CA) that forwards the response to the application server

## Description

### FIELD OF THE INVENTION

The present invention relates to a system for authenticating a user preserving confidentiality of user secret data, like password.

### BACKGROUND

Performing online authentication on any computer is currently very risky. The authentication model of cryptographic challenge-response, used in particular in web browsers, was designed to address two main threats: prevent the eavesdropping of a password by someone between the user and the application server and avoid a replay attack ("I don't know what you password is, but resending an authentication message eavesdropped can grant me access").

The untrusted nature of personal computers is a great opportunity for the pirates to collect sensitive information especially access codes. A simple keystroke logger records and transmits the secret information (eg. access codes, passwords, PIN numbers...) entered into these personal computers. At this stage, a malware can automate at large scale spoofing and perform unauthorized transactions masquerading as the user. The cryptographic challenge response model is useless against an attacker that is not between the personal computer and the application server, but is inside the personal computer.

There is need to find a way to protect passwords from the keyloggers that thrive on personal computers, without deep changes in today's ways of authentication (namely the cryptographic challenge-response model).

### SUMMARY

To remedy the problems referred to hereinabove, a method according to the invention for authenticating a user of a communication device implementing a client application connected to an application server through a telecommunication network, the application server having sent a challenge to the client application to authenticate the user, comprises the following steps in an user device associated with the communication device :
establishing a connection with the client application that invites the user to enter secret data on a screen of the communication device,
retrieving the challenge from the client application,
prompting the user to enter secret data,
calculating a response to the challenge, based on secret data entered by the user and the retrieved challenge,
sending the response to the client application that forwards the response to the application server.

The invention advantageously keeps the cryptographic challenge-response model while protecting the password by exporting one of its phase out of the untrusted communication device. Thus, the password, or more precisely the response to the challenge, is not entered in the communication device, but the entry of the password is delegates to another device that will operate a cryptographic step before handling the result to the communication device. This way, even if the overall cryptographic protocol remains the same, at no moment the real password transits in clear in the untrusted communication device. The password is entered in clear at the other device that may be eventually untrusted as well, but doesn't know the context of usage.

In an embodiment, the user device is an electronic device associated with an input device linked to the communication device.

In an embodiment, the user device is associated with a keyboard.

In an embodiment, the challenge is sent to the user device from the communicating device.

In an embodiment, the user device detects reception of the challenge, activates a relay that redirects keyboard output to it and prompts the user to enter secret data by alerting the user with a signal, calculates the response based on keystrokes done by the user, and sends the response to the communication device before activating the relay to connect the keyboard output back to the communication device.

In an embodiment, the user device detects reception of a specific header signal coming from the communication device toward the keyboard via a keyboard exchange protocol, receives the challenge, activates a filter that intercepts every keystroke, prompts the user to enter secret data by alerting the user with a signal, calculates the response based on intercepted keystrokes, and sends the response to the communication device before deactivating the filter.

In an embodiment, the client application displays the challenge on the screen of the communication device, the user device activates a filter that intercepts every keystroke upon manual activation of given means by the user, prompts the user to enter the challenge by alerting the user with a signal, prompts the user to enter secret data by alerting the user with another signal, calculates the response based on intercepted keystrokes, and sends the response to the communication device before deactivating the filter.

In an embodiment, manual activation of given means by the user corresponds to one of dedicated keycaps, dedicated buttons, or dedicated combination of keystrokes.

In an embodiment, the user device is a mobile terminal equipped with a camera, the client application displays the challenge on a screen of the communication device, the challenge being captured by the camera.

A further object of the invention is an user device for authenticating a user of a communication device implementing a client application connected to an application server through a telecommunication network, the application server having sent a challenge to the client application to authenticate the user, the user device being associated with the communication device and the user device comprising:
means for establishing a connection with the client application invites the user to enter secret data on a screen of the communication device,
means for retrieving the challenge from the client application,
means for prompting the user to enter secret data,
means for calculating a response to the challenge, based on secret data entered by the user and the retrieved challenge,
means for sending the response to the client application that forwards the response to the application server.

The invention relates further to a computer program adapted to be executed in a user device for authenticating a user of a communication device implementing a client application connected to an application server through a telecommunication network, said program including instructions which, when the program is executed in said device, execute the steps of the method of the invention.

### BRIEF DESCRIPTION OF THE FIGURES

Some embodiments of the present invention are now described, by way of example only, and with reference to the accompanying drawings, in which:
- FIG. 1 is a schematic block-diagram of a communication system according to an embodiment of the invention,
- FIG. 2 is a flowchart showing steps performed to execute a method for authenticating a user preserving confidentiality of user secret data according to an embodiment of the invention.

The same reference number represents the same element or the same type of element on all drawings.

### DESCRIPTION OF EMBODIMENTS

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

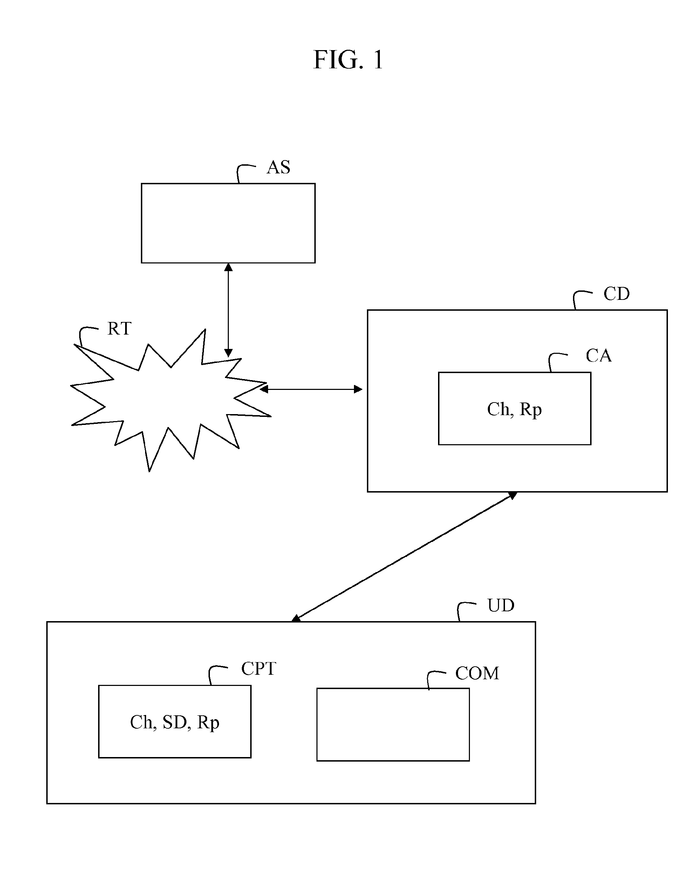

Referring to FIG. 1, a communication system comprises an application server AS, a communication device CD associated with a user device UD, the application server AS and the communication device CD being able to communicate between them through a telecommunication network TN.

The telecommunication network TN may be a wired or wireless network, or a combination of wired and wireless networks.

The telecommunication network TN can comprise a packet network, for example, an IP ("Internet Protocol") high-speed network such as the Internet or an intranet, or even a company-specific private network.

The application server AS is a network entity that is able to communicate with the communication device CD and that offers a web service requiring user authentication. The application server AS manages a database containing user secrets associated with challenges to send to client applications, like web browsers, implemented in communication devices.

Especially, the application server AS manages a user authentication process based on challenge-response model. The application server is able to receive a client request, to retrieve a user secret, to calculate a challenge, and to send the challenge to a client application. Then the application server is able to receive a response to the challenge given by a user via the client application and to check the response in order to authenticate the user.

It is assumed that a challenge-response authentication concerns a family of protocols in which one party, like a server, presents a question and another party, like a client, must provide a valid answer to be authenticated. Especially, the server sends a challenge to the client that invites the user to enter secret data, and calculates a response based on a hashing function of the challenge and the secret data.

The communication device CD can be a mobile terminal or a fixed terminal.

As fixed terminal, the communication device can be a personal computer connected directly via a modem to link of type xDSL (Digital Subscriber Line) or ISDN (Integrated Services Digital Network Services), using a wireline access to communicate with the application server.

As mobile terminal, the communication device can be a radio communication mobile terminal. For example, the communication device is a mobile phone, or is a communicating Personal Digital Assistant PDA, or an intelligent telephone like SmartPhone, using a wireless access to communicate with the application server.

The communication device CD comprises a client application CA, like a web browser, able to receive a challenge Ch from the application server AS and to send a response Rp to the challenge back to the application server.

The client application CA establishes a channel association with the user device UD, in order to send the challenge to the user device and to collect the response to the challenge.

The user device UD is an entity allowing the user to enter secret data SD, like a password, upon reception of the challenge Ch from the client application. The user device UD comprises a communication module COM and a computing module CPT.

The communication module COM is able to establish a channel association with the client application CA in order to activate the computing module CPT before reception of the challenge.

The computing module CPT is able to take as input secret data SD entered by the user and able to calculate the response Rp to the challenge Ch based on secret data SD.

In one embodiment, the user device UD is an electronic device associated with an input device such as a keyboard linked to the communication device CD. In an embodiment, the user device is embedded in the keyboard. In an alternative, the user device UD is an external appliance linked to the keyboard. In all cases, the communication device CD is linked to the keyboard via the user device UD that acts as a filter. For example, the user device UD is linked to the communication device CD through a wire line and an USB interface. In another example, the user device UD is linked to the communication device CD through a wireless connection of Bluetooth type. In his embodiment, it is assumed that the user device is an enhancement of a keyboard, including a microcontroller able to filter a challenge and to compute a response to the challenge.

In another embodiment, the user device UD is a mobile terminal like a SmartPhone, linked to the communication device CD through a wireless connection, of Bluetooth type for example. In this example, the user device UD is detected by the communication device CD as a Bluetooth keyboard, and the modules COM and CPT correspond to an application implemented in the mobile terminal. Also, it is assumed that the mobile terminal is equipped with a camera able to capture the challenge displayed on a screen of the communication device.

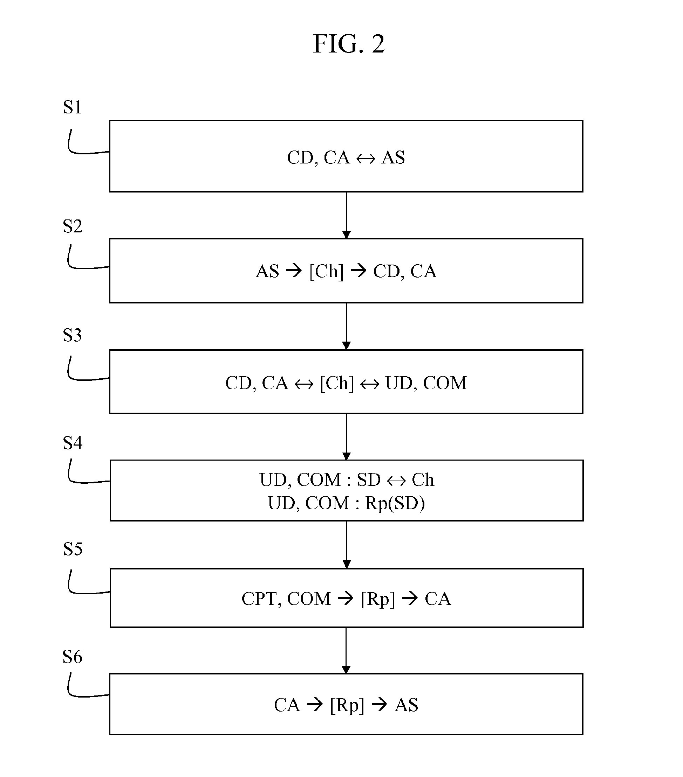

With reference to FIG. 2, a method for authenticating a user preserving confidentiality of user secret data according to one embodiment of of the invention comprises steps S1 to S6 executed automatically within the communication system.

At step S1, the user wishes to use a service provided by the application server AS. To this end, the client application CA implemented in the communication device CD establishes a connection with a server application implemented in the application server AS and transmits a request for the service. The application server launches an authentication process based on challenge-response model.

At step S2, the application server AS retrieves a user secret and calculates a challenge Ch based on this user secret. The application server then sends the challenge Ch to the client application CA.

At step S3, the client application CA establishes a connection with the communication module COM of the user device UD and invites the user to enter secret data SD on a screen of the communication device.

In one embodiment, client application CA displays the challenge on the screen of the communication device.

The user device UD retrieves the challenge Ch from the client application CA.

In one embodiment wherein the user device is associated with a keyboard, the client application CA sends the challenge Ch to the user device UD, for example through keyboard exchange protocol.

In another embodiment wherein the user device is a mobile terminal, the user device captures the challenge displayed on a screen of the communication device, by means of camera for example.

At step S4, the computing module CPT prompts the user to enter secret data SD with respect to the invitation to enter secret data displayed on the screen.

The computing module CPT calculates a response Rp to the challenge Ch, based on secret data entered by the user and the challenge.

At step S5, the computing module CPT collaborates with the communication module COM to send the response Rp to the client application CA.

At step S6, the client application CA receives the response and forwards it to the application server AS that can authenticate the user by means of the received response Rp.

Hereinafter are described some examples illustrating embodiments of the method according to the invention, with some reference to the steps of the method. The second and third examples contain alternative implementations of the first example.

In a first example, the user device is an enhanced keyboard detected by the communication device as a USB HID device (Human Interface Device) that is listening to communication device commands.

The challenge is sent through USB port of the communication device to the user device, according to step S3. Upon reception of the challenge, the user device detects reception of the challenge, activates a relay that redirects keyboard output to it and alerts the user, by switching on a colored diode for example, that a challenge for authentication has been received, meaning that the user is invited to enter secret data, according to step S4. The user then can type his password, and when the user is done (by typing "Enter" touch for example), the user device calculates the response based on keystrokes done by the user and sends it back to the communication device according to step S5. Then the user device activates the relay to connect the keyboard output back to the communication device.

In order that the client application sends the challenge to the user device, a specific protocol may be implemented for communication exchange between the client application and the user device with some basic commands, a microcontroller in the user device being able to interpret these commands especially to detect reception of a challenge, prompt to user to enter secret data and calculate the response.

In a second example, the user device is considered as a keyboard filter associated with a keyboard. The user device can be implemented directly in a new generation keyboard microcontroller or can be an external appliance plugged between the communication device and the keyboard. The user device comprises means to send a signal to a human, by a led or an audio signal, for instance.

The function of filter is acting as pass-through except in the following case: on reception of a specific header signal coming from the communication device toward the keyboard, the user device knows that it will get the challenge information and activates a filter that intercepts every keystroke, before receiving the challenge. The protocol used for this signal could be for instance TLV (Type Length Value) data under the following form: <header><challenge_length><challenge>. This data is not resent to the keyboard. The user device has to perform the step S4 of the secret data retrieval. For that the user device signifies to the user that the time has come to enter the secret data on the keyboard by sending a dedicated human signal, like an audio signal or a visual signal by lighting a LED. The user then enters the secret data on the keyboard. As the user device acts as a filter, it receives every keystroke, and knows when the entry is done when it receives the 'Enter' keystroke, then it turns off the dedicated human signal.

Thus, the user device has the secret data but doesn't send it to the communication device. The user device performs the step S4 of response calculation, based on both the challenge and the secret data. Finally, user device sends the response to the communication device by sending the corresponding keystrokes, and returns to its pass-through functionality; i.e. deactivates the filter. The client application doesn't get the secret data in its entry field, but directly the response.

In a third example, the user device is considered as a keyboard filter associated with a keyboard, similar to the user device of the second example, the client application being able to send keyboard type information toward the keyboard. The user device still can be embedded in a keyboard, being a new type of keyboard or be an external appliance plugged between the communication device and the keyboard. The user device still has a way to signal a particular state to a user (sound, light, for instance). In addition, the user device offers a way for a user to signal a particular state to the user device itself, via a dedicated new keycaps, a new button, or a dedicated combination of simultaneous keystrokes like 'p'+'s'+'w'+'r'+'d' for instance.

In the method, the client application displays an invitation to enter secret data to the user and displays also the challenge, which is a specific readable data. Then the user can signal the entry of information to the user device by activating the chosen means: pushing the new keycaps, pushing the dedicated button, or pushing simultaneously the right combination. In return, the user device signals its new state by the appropriate way of communicating with the user (led, sound, etc).

Then the user will type the challenge on the keyboard, challenge that is filtered by the user device and not sent to the communication device. The user device detects the end of the entry by the 'Enter' keystroke for example.

Optionally, the user device signals that a next step has been reached by changing its way to communicate with the user, for instance by illuminating a two colored led for instance or by changing the sound. This indicates that user is now invited to enter secret data.

Then the user will type the secret data on the keyboard, secret data that will be filtered by the user device and not sent to the communication device. The user device detects the end of the entry by the 'Enter' keystroke for example.

Finally, the user device performs the step S4 of response calculation, based on both the challenge and the secret data. Finally, user device sends the response to the communication device by sending the corresponding keystrokes, and returns to its pass-through functionality; i.e. deactivates the filter.

The functioning of user device of the third example is close to the functioning of user device of the second example, except that the activation of filter function is done manual activation of a given means by the user instead of specific signal.

For the three first examples, it is assumed that the user device knows standard hash function to calculate the response based on the secret data and the challenge, and the selection of hash function is included in the message comprising the challenge. For the third example, the challenge can be displayed in correspondence with an information designating a specific hash function.

In a fourth example, the user device is a smart phone with a camera. The user device is detected by the communication device as a Bluetooth keyboard for example, after establishment of wireless connection between the communication device and the user device. The challenge is presented in the communication device as a readable image such as a Bare code, a QR code or plain characters in a predefined frame. The challenge is scanned and read by the user device, thus retrieved by the user device according to step S3. The user device implements an application that invites the user to enter its secret data and then calculates the response based on the secret data and the challenge, according to step S4. The user device sends the response directly to the entry field of the client application according to step S5.

In the fourth example, the readable image containing the challenge can include also an information designating a specific hash function.

The invention described here relates to a method and device for authenticating a user preserving confidentiality of user secret data. In an embodiment, the steps of the method of the invention are determined by the instructions of a computer program incorporated in a data processing device such as the user device UD according to the invention. The program includes program instructions which, when said program is executed in a processor of the data processing device the operation whereof is then controlled by the execution of the program, execute the steps of the method according to the invention.

As a consequence, the invention applies also to a computer program, in particular a computer program on or in an information medium readable by a data processing device, adapted to implement the invention. That program may use any programming language and be in the form of source code, object code or an intermediate code between source code and object code, such as a partially compiled form, or in any other desirable form for implementing the method according to the invention.

The information medium may be any entity or device capable of storing the program. For example, the medium may include storage means or a recording medium on which the computer program according to the invention is recorded, such as a ROM, for example a CD ROM or a microelectronic circuit ROM, or a USB key, or magnetic recording means, for example a diskette (floppy disk) or a hard disk.

## Claims

1. A method for authenticating a user of a communication device (CD) implementing a client application (CA) connected to an application server (AS) through a telecommunication network (TN), the application server (AS) having sent a challenge (Ch) to the client application to authenticate the user, the method comprising the following steps in an user device (UD) associated with the communication device (CD) :
establishing (S3) a connection with the client application (CA) that invites the user to enter secret data (SD) on a screen of the communication device (CD),
retrieving (S3) the challenge (Ch) from the client application (CA),
prompting (S4) the user to enter secret data (SD),
calculating (S4) a response (Rp) to the challenge (Ch), based on secret data (SD) entered by the user and the retrieved challenge (Ch),
sending (S5) the response (Rp) to the client application (CA) that forwards the response to the application server (AS).

2. A method according to claim 1, wherein the user device (UD) is an electronic device associated with an input device linked to the communication device (CD).

3. A method according to claim 1 or 2, wherein the user device is associated with a keyboard.

4. A method according to any of claims 1 to 3, wherein the challenge (Ch) is sent to the user device (UD) from the communicating device (CD).

5. A method according to claim 4, wherein the user device detects reception of the challenge, activates a relay that redirects keyboard output to it and prompts the user to enter secret data by alerting the user with a signal, calculates the response based on keystrokes done by the user, and sends the response to the communication device before activating the relay to connect the keyboard output back to the communication device.

6. A method according to claim 4, wherein the user device detects reception of a specific header signal coming from the communication device toward the keyboard via a keyboard exchange protocol, receives the challenge, activates a filter that intercepts every keystroke, prompts the user to enter secret data by alerting the user with a signal, calculates the response based on intercepted keystrokes, and sends the response to the communication device before deactivating the filter.

7. A method according to claim 3, wherein the client application (CA) displays the challenge (Ch) on the screen of the communication device (CD), the user device activates a filter that intercepts every keystroke upon manual activation of given means by the user, prompts the user to enter the challenge by alerting the user with a signal, prompts the user to enter secret data by alerting the user with another signal, calculates the response based on intercepted keystrokes, and sends the response to the communication device before deactivating the filter.

8. A method according to claim 7, wherein manual activation of given means by the user corresponds to one of dedicated keycaps, dedicated buttons, or dedicated combination of keystrokes.

9. A method according to claim 1, wherein the user device (UD) is a mobile terminal equipped with a camera, the client application (CA) displays the challenge (Ch) on a screen of the communication device (CD), the challenge being captured by the camera.

10. User device (UD) for authenticating a user of a communication device (CD) implementing a client application (CA) connected to an application server (AS) through a telecommunication network (TN), the application server (AS) having sent a challenge (Ch) to the client application to authenticate the user, the user device (UD) being associated with the communication device (CD) and the user device comprising:
means (COM) for establishing a connection with the client application (CA) invites the user to enter secret data (SD) on a screen of the communication device (CD),
means (COM) for retrieving the challenge (Ch) from the client application (CA),
means (CPT) for prompting the user to enter secret data (SD),
means (CPT) for calculating a response (Rp) to the challenge (Ch), based on secret data (SD) entered by the user and the retrieved challenge (Ch),
means (COM) for sending the response (Rp) to the client application (CA) that forwards the response to the application server (AS).

11. A computer program adapted to be executed in an user device (UD) for authenticating a user of a communication device (CD) implementing a client application (CA) connected to an application server (AS) through a telecommunication network (TN), the application server (AS) having sent a challenge (Ch) to the client application to authenticate the user, the user device (UD) being associated with the communication device (CD), said program including instructions which, when said program is executed in said user device, execute the following steps :
establishing (S3) a connection with the client application (CA) that invites the user to enter secret data (SD) on a screen of the communication device (CD),
retrieving (S3) the challenge (Ch) from the client application (CA),
prompting (S4) the user to enter secret data (SD),
calculating (S4) a response (Rp) to the challenge (Ch), based on secret data (SD) entered by the user and the retrieved challenge (Ch),
sending (S5) the response (Rp) to the client application (CA) that forwards the response to the application server (AS).

## Amended claims

### Amended claims in accordance with Rule 137(2) EPC.

**1.** A method for authenticating a user of a communication device (CD) implementing a client application (CA) connected to an application server (AS) through a telecommunication network (TN), the application server (AS) having sent a challenge (Ch) to the client application to authenticate the user, the method comprising the following steps in an user device (UD) that is associated with the communication device (CD) and that acts as a filter:
establishing (S3) a connection with the client application (CA) that invites the user to enter secret data (SD) on a screen of the communication device (CD),
retrieving (S3) the challenge (Ch) from the client application (CA), the challenge being sent to the user device (UD) by the client application (CA) or the challenge being displayed on a screen of the communication device (CD),
prompting (S4) the user to enter secret data (SD),
calculating (S4) a response (Rp) to the challenge (Ch), based on secret data (SD) entered by the user and the retrieved challenge (Ch),
sending (S5) the response (Rp) to the client application (CA) that forwards the response to the application server (AS).

**2.** A method according to claim 1, wherein the user device (UD) is an electronic device associated with an input device linked to the communication device (CD).

**3.** A method according to claim 1 or 2, wherein the user device is associated with a keyboard.

**4.** A method according to any of claims 1 to 3, wherein the challenge (Ch) is sent to the user device (UD) from the communicating device (CD).

**5.** A method according to claim 4, wherein the user device detects reception of the challenge, activates a relay that redirects keyboard output to it and prompts the user to enter secret data by alerting the user with a signal, calculates the response based on keystrokes done by the user, and sends the response to the communication device before activating the relay to connect the keyboard output back to the communication device.

**6.** A method according to claim 4, wherein the user device detects reception of a specific header signal coming from the communication device toward the keyboard via a keyboard exchange protocol, receives the challenge, activates a filter that intercepts every keystroke, prompts the user to enter secret data by alerting the user with a signal, calculates the response based on intercepted keystrokes, and sends the response to the communication device before deactivating the filter.

**7.** A method according to claim 3, wherein the client application (CA) displays the challenge (Ch) on the screen of the communication device (CD), the user device activates a filter that intercepts every keystroke upon manual activation of given means by the user, prompts the user to enter the challenge by alerting the user with a signal, prompts the user to enter secret data by alerting the user with another signal, calculates the response based on intercepted keystrokes, and sends the response to the communication device before deactivating the filter.

**8.** A method according to claim 7, wherein manual activation of given means by the user corresponds to one of dedicated keycaps, dedicated buttons, or dedicated combination of keystrokes.

**9.** A method according to claim 1, wherein the user device (UD) is a mobile terminal equipped with a camera, the client application (CA) displays the challenge (Ch) on a screen of the communication device (CD), the challenge being captured by the camera.

**10.** User device (UD) for authenticating a user of a communication device (CD) implementing a client application (CA) connected to an application server (AS) through a telecommunication network (TN), the application server (AS) having sent a challenge (Ch) to the client application to authenticate the user, the user device (UD) being associated with the communication device (CD) and acting as a filter, and the user device comprising:
means (COM) for establishing a connection with the client application (CA) invites the user to enter secret data (SD) on a screen of the communication device (CD),
means (COM) for retrieving the challenge (Ch) from the client application (CA), the challenge being sent to the user device (UD) by the client application (CA) or the challenge being displayed on a screen of the communication device (CD),
means (CPT) for prompting the user to enter secret data (SD),
means (CPT) for calculating a response (Rp) to the challenge (Ch), based on secret data (SD) entered by the user and the retrieved challenge (Ch),
means (COM) for sending the response (Rp) to the client application (CA) that forwards the response to the application server (AS).

**11.** A computer program adapted to be executed in an user device (UD) for authenticating a user of a communication device (CD) implementing a client application (CA) connected to an application server (AS) through a telecommunication network (TN), the application server (AS) having sent a challenge (Ch) to the client application to authenticate the user, the user device (UD) being associated with the communication device (CD) and acting as a filter, said program including instructions which, when said program is executed in said user device, execute the following steps :
establishing (S3) a connection with the client application (CA) that invites the user to enter secret data (SD) on a screen of the communication device (CD),
retrieving (S3) the challenge (Ch) from the client application (CA), the challenge being sent to the user device (UD) by the client application (CA) or the challenge being displayed on a screen of the communication device (CD),
prompting (S4) the user to enter secret data (SD),
calculating (S4) a response (Rp) to the challenge (Ch), based on secret data (SD) entered by the user and the retrieved challenge (Ch),
sending (S5) the response (Rp) to the client application (CA) that forwards the response to the application server (AS).
